# EUROPEAN PATENT SPECIFICATION

(11) **EP 3 866 513 B1**
(45) Date of publication and mention of the grant of the patent: **17.09.2025**
(21) Application number: 20188498.8
(22) Date of filing: 30.07.2020
(51) Int. Cl.: H04W 48/16, H04W 8/18, H04W 52/02, H04W 88/06

(54) **METHOD AND DEVICE FOR SEARCH FOR WIRELESS NETWORK, AND STORAGE MEDIUM**
VERFAHREN UND VORRICHTUNG ZUR SUCHE NACH EINEM DRAHTLOSEN NETZWERK UND SPEICHERMEDIUM
PROCÉDÉ ET DISPOSITIF DE RECHERCHE DE RÉSEAU SANS FIL ET SUPPORT D'ENREGISTREMENT

(30) Priority: 13.02.2020 CN 202010090747
(43) Date of publication of application: 18.08.2021
(73) Proprietor: Beijing Xiaomi Mobile Software Co., Ltd., Beijing 100085 (CN)
(72) Inventor: HUANG, Qianhong, Beijing, Beijing 100085 (CN)
(74) Representative: dompatent von Kreisler Selting Werner - Partnerschaft von Patent- und Rechtsanwälten mbB

(56) References cited:
- EP-A1- 1 858 278
- EP-A1- 3 094 138
- EP-B1- 1 858 278
- EP-B1- 3 094 138
- US-A1- 2006 009 216
- US-A1- 2010 015 973
- US-A1- 2012 322 446

## Description

### TECHNICAL FIELD

The present disclosure relates to the field of wireless communication, in particular to a method and device for searching for a wireless network, and a storage medium.

### BACKGROUND

With the development of 5th generation mobile networks (5G) and the advance of 5G network actual deployment, networks which a terminal may access include a 5G Standalone (5G SA) network, a 5G Non-Standalone (5G NSA) network, a Long Term Evolution (LTE)/4G network as well as a Wideband Code Division Multiple Access (WCDMA) network and a Time Division-Synchronous Code Division Multiple Access (TDSCDMA) network of 3G, and even include a Global System for Mobile Communications (GSM) network and a Code Division Multiple Access (CDMA) network of 2G.

Different access technologies, different coverage characteristics of frequency bands as well as commercial deployment and actual requirements of operators result in that these different access technologies are not in a simple and rapid evolution relationship, but different networks may coexist for a long time. This makes search for a wireless access network of a mobile communication terminal more complicated.

Related technology is known from US2006/009216 A1, EP3094138A1 and EP1858278A1.

### SUMMARY

The disclosure provides a method and device for searching for a wireless network as described in the appending claims.

The technical solutions provided by the embodiments of the disclosure can include the following advantages. When searching for a wireless network through the technical solutions of the embodiments of the disclosure, a terminal can rapidly predict a type of a wireless network which the terminal may access according to the type of a network where the terminal historically resided, and then conduct targeted search according to the predicted network type. In this way, not only a process of network search is simplified and the search efficiency is improved, but also time and power consumption of network search is reduced and a user experience is improved.

It should be understood that the above general description and the following detailed description are exemplary and explanatory only, and are not intended to limit the disclosure.

### BRIEF DESCRIPTION OF THE DRAWINGS

The accompanying drawings herein, which are incorporated in and constitute a part of this specification, illustrate embodiments consistent with the disclosure and together with the description serve to explain the principles of the disclosure.
FIG. 1 is a first flowchart of a method for searching for a wireless network shown according to an exemplary embodiment;
FIG. 2 is a second flowchart of a method for searching for a wireless network shown according to an exemplary embodiment;
FIG. 3 is a third flowchart of a method for searching for a wireless network shown according to an exemplary embodiment;
FIG. 4 is a fourth flowchart of a method for searching for a wireless network shown according to an exemplary embodiment.
FIG. 5 is a fifth flowchart of a method for searching for a wireless network shown according to an exemplary embodiment;
FIG. 6 is a structural block diagram of a device for searching for a wireless network shown according to an exemplary embodiment; and
FIG. 7 is a physical structure block diagram of a device for searching for a wireless network shown according to an exemplary embodiment.

### DETAILED DESCRIPTION

Exemplary embodiments will be described in detail herein, examples of which are illustrated in the accompanying drawings. When the following description refers to the accompanying drawings, the same numbers in different accompanying drawings represent the same or similar elements unless otherwise indicated. The implementations described in the following exemplary embodiments do not represent all implementations consistent with the disclosure. On the contrary, they are merely examples of devices and methods consistent with some aspects of the disclosure as detailed in the appended claims.

The terms used in the present disclosure are for describing particular embodiments only, and are not intended to limit the present disclosure. The singular forms "a/an", "the" and "this" used in the present disclosure and the appended claims are also intended to include the plural forms unless the context clearly indicates other meanings. It is to be understood that the term "and/or" as used herein refers to and includes any or all possible combinations of one or more associated listed items.

It is to be understood that although the terms first, second, third, etc. may be used to describe various information in the present disclosure, the information should not be limited to these terms. The terms are only used to distinguish the same type of information from each other. For example, without departing from the scope of the present disclosure, the first information may also be referred to as second information, and similarly, the second information may also be referred to as first information. Depending on the context, the word "if" as used herein may be interpreted as "during" or "when" or "in response to determination".

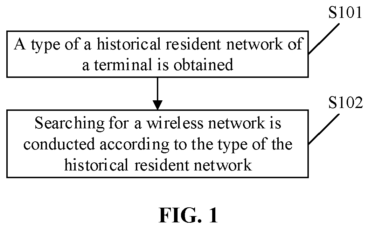

FIG. 1 is a flowchart of a method for searching for a wireless network according to an exemplary embodiment. The method is applied to a terminal. As shown in FIG. 1, the method includes the following operations.

Operation S101 includes that a type of a historical resident network of the terminal is obtained.

Operation S102 includes that searching for a wireless network is conducted according to the type of the historical resident network.

A terminal that supports networks with a higher level, such as a 5G network, is typically able to be downwards compatible, and has an ability to connect to 4G, 3G and even 2G networks. In this way, when the terminal is to access a network, the terminal may first start searching from the highest level of networks according to the priority of networks. When no network is found, searching for the next level of network may be conducted. In a situation that the terminal is in network-underdeveloped regions for a long time, such as a region not covered with a 5G network or a 4G network, the terminal can only reside in a network with a lower level, for example, using a 3G network. If searching for a network is conducted according to priority as above described, some unnecessary search may be made every time, causing time waste and power consumption.

Information of historical resident networks of a terminal can embody probabilities of residing in different network types of the terminal and other characteristics, and thus, preference of the terminal can be further embodied. That is, a user of the terminal usually has a scope of frequent activities, and the information of the historical resident networks of the terminal may embody network characteristics of an area scope of the user. Therefore, the present embodiment is intended to predict the type of a network that the terminal can access by obtaining the types of the historical resident networks of the terminal.

The types of the above historical resident networks may be types of networks where the terminal resides in the longest time or most frequently in a preset period of time, or may also be a type of a network where the terminal last resided, such as a type of a network where the terminal resided last shutdown, etc. In other words, the types of the historical resident networks can embody characteristics of previously resident networks of the terminal.

When starting to register on a network, the terminal may search for the types of the historical resident networks of the terminal, so as to quickly access a network with a higher probability. For example, a type of a historical resident network of the terminal may be a 5G network, therefore, the terminal may have a high probability of being within a coverage range of the 5G network at present. Accordingly, the terminal can have a high probability of residing in the 5G network by searching for the 5G network this time. When a type of a historical resident network of the terminal is a 4G network, the terminal may have a lower probability of being within the coverage range of a 5G network. Therefore, the terminal may quickly reside in the 4G network by directly searching for the 4G network. Hence, the type of a historical resident network of a terminal might be regarded as a previously available network type information, and might also be referred to as such.

Based on the above method, unnecessary network search can be reduced, network search time can be shortened, efficiency can be improved, power consumption can be reduced, and then user experience is improved.

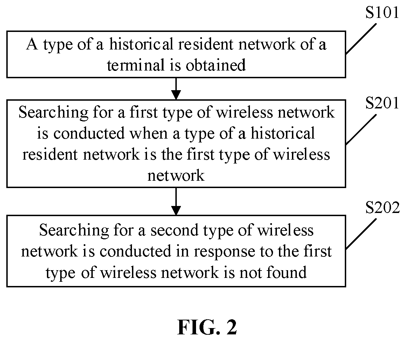

As shown in FIG. 2, in the above operation S102, searching for the wireless network according to the type of the historical resident network includes that:
Operation S201, searching for a first type of wireless network is conducted when a type of a historical resident network is the first type of wireless network; and
Operation S202, searching for a second type of wireless network is conducted in response to the first type of wireless network is not found. A performance index of the first type of wireless network may be superior to a performance index of the second type of wireless network.

A terminal may save information such as a type of a resident network before being disconnected from the resident network or shut down. Therefore, the terminal may search for networks according to the type of the previous resident networks when searching for networks next time. When a type of the previous resident network is the first type of wireless network, it may be predicted that the terminal may reside in the first type of wireless network at present. Therefore, the terminal may search for the first type of wireless network directly. In response to that a network signal of the first type of wireless network is found, the terminal may be connected to and reside in the first type of wireless network. In response to that no signal of the first type of wireless network is found, which indicates that there may be no network coverage of the first type of wireless network in a region where the terminal is located at present, the terminal may search for the second type of wireless network.

The performance index of the above first type of wireless network is superior to that of the second type of wireless network. The performance index herein may include but is not limited to: one or more of a transmission rate, delay, capacity, QoS, time division or frequency division multiplexing ways, etc. A net generation of the first type of wireless network may be higher than that of the second type of wireless network. That is, if the first type of wireless network can be found, the terminal may first reside in the first type of wireless network, so as to ensure a high network transmission speed to make user experience better. For example, the performance index of the first type of wireless network is superior to that of the second type of wireless network, which may include: a system bandwidth of the first type of wireless network is greater than a system bandwidth of the second type of wireless network.

When the type of the previous resident network is not the first type of wireless network, for example, the terminal resided in the second type of wireless network last time, the terminal may search for the second type of wireless network directly without searching for the first type of wireless network. Since the terminal has a lower probability of being under a coverage range of the first type of wireless network at present, the terminal can realize network access quickly by this way, thereby reducing unnecessary search.

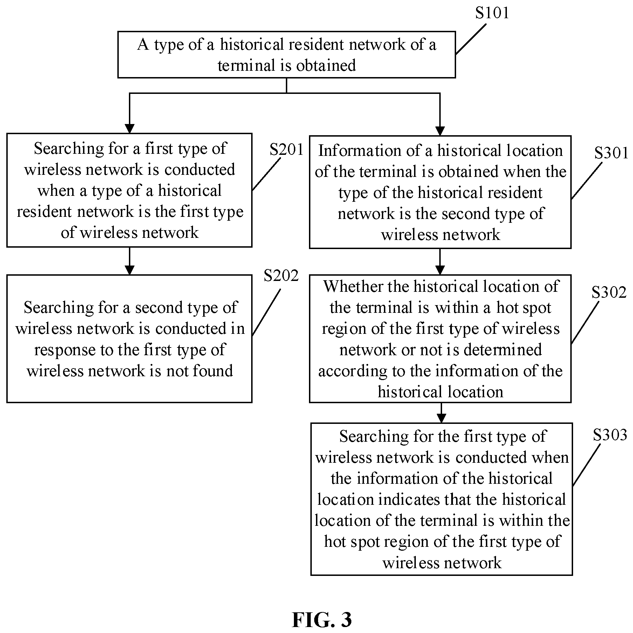

As shown in FIG. 3, in the above operation S102, searching for the wireless network according to the type of the historical resident network includes:
operation S301, information of a historical location of the terminal is obtained when a type of the historical resident network is a second type of wireless network;
operation S302, whether the historical location of the terminal is within a hot spot region of a first type of wireless network or not is determined according to the information of the historical location; and
operation S303, searching for the first type of wireless network is conducted when the information of the historical location indicates that the historical location of the terminal is within the hot spot region of the first type of wireless network. A performance index of the first type of wireless network is superior to a performance index of the second type of wireless network.

Compared with the second type of wireless network, the first type of wireless network may have advantages including higher data rate, low delay, good network performance, etc. Therefore, the terminal may be expected to reside in the first type of wireless network as much as possible when the terminal has a capability of supporting the first type of wireless network. Moreover, considering that a type of a previous resident network may further be impacted by other factors, such as changes of resident information caused by artificial setting or changes of communication requirements, when the type of the previous resident network is the second type of wireless network, whether the terminal may be within a coverage range of the first type of wireless network at present may further be predicted according to the information of the historical location of the terminal.

It is to be noted that the hot spot region of the first type of wireless network may be preset according to information such as present construction statuses of base stations of the first type of wireless network of operators. The terminal may determine which region scopes are within the hot spot region of the first type of wireless network through a preset list or through information obtained through the network in advance.

When the information of the historical location of the terminal indicates that the historical location of the terminal is within the hot spot region of the first type of wireless network, the terminal is also more likely to be within the hot spot region of the first type of wireless network at present. In this case, the terminal may search for the first type of wireless network directly even if the type of the previous resident network is the second type of wireless network. When searching for the first type of wireless network is conducted, the terminal may directly reside in the first type of wireless network without continuing a search for the second type of wireless network.

Based on the above method, historical resident information and information of a historical location of the terminal may be comprehensively taken into consideration to predict whether the terminal can reside in the first type of wireless network or not at present, so as to make the terminal reside under an environment with the first type of wireless network with high performance as far as possible, thus improving a user experience.

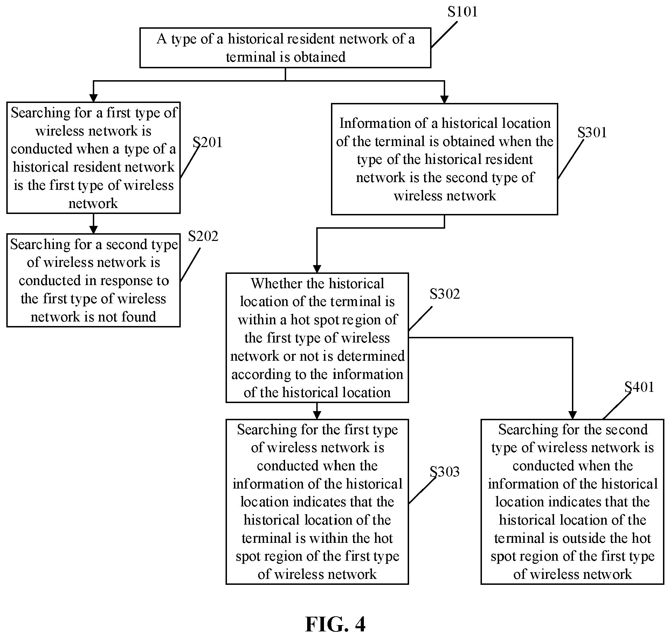

As shown in FIG. 4, in the above operation S102, searching for the wireless network according to the type of the historical resident network further includes:
operation S401, searching for a second type of wireless network is conducted when information of a historical location indicates that the historical location of the terminal is outside a hot spot region of a first type of wireless network.

When a type of a previous resident network of the terminal is the second type of wireless network and the historical location of the terminal is outside the hot spot region of the first type of wireless network, the terminal is less likely to be within a coverage range of the first type of wireless network presently. Therefore, the terminal may directly search for the second type of wireless network, and access and reside in the second type of wireless network at a higher speed, thus improving a user experience, shortening unnecessary time of searching for the first type of wireless network, reducing power consumption of searching for the first type of wireless network, and improving search efficiency.

In some embodiments, the method may further include:
detecting a type of a present resident network of the terminal; and
when the type of the present resident network of the terminal is a second type of wireless network, searching for the first type of wireless network while the terminal is kept residing in the second type of wireless network.

The terminal may move, therefore, the terminal may enter into coverage ranges of different network types, or network signal strengths in regions where the terminal is located may change. In this case, if the terminal always resides in the second type of wireless network without switching, while a coverage signal of the first type of wireless network exists in a present environment, the terminal cannot use the first type of wireless network. This may lead to waste of resources, and the user cannot get best experience in network.

Therefore, in the case that the terminal resides in the second type of wireless network herein, the terminal may keep using the second type of wireless network for communication, and meanwhile, may search for the first type of wireless network in a background. In a situation that a network signal of the first type of wireless network is not found, the communication through the second type of wireless network can still be maintained without affecting use of the network. When the network signal of the first type of wireless network is found, the terminal may reside in the first type of wireless network, improving a use effect of the network.

In some embodiments, the method may further include:
switching to reside in the first type of wireless network in response to that the terminal finds the first type of wireless network.

The terminal still resides in the second type of wireless network at present. When searching for the first type of wireless network, the terminal may be disconnected from the second type of wireless network and switch to the first type of wireless network, thus improving the use effect of the network, realizing highest network configuration of the terminal to a greater extent, and improving the user experience while reducing the waste of the resources.

In some embodiments, the method may further include:
saving resident information of residing in the first type of wireless network when the type of the present resident network of the terminal is the first type of wireless network.

When the type of the present resident network is the first type of wireless network, the present terminal can have better network performance and is not needed to switch to other types of networks, thus achieving a better network communication effect. Meanwhile, present resident information may be saved, including the type of the present resident network of the terminal which is the first type of wireless network, location information of the present terminal, etc.

When the type of the present resident network of the terminal is the second type of wireless network, present resident information may be saved, including identification information of not residing in the first type of wireless network presently or information of residing in the second type of wireless network presently, location information of the present terminal, etc.

In this way, in a case that the terminal is disconnected from network connection, the terminal may conveniently obtain previous resident information of the terminal the next time it needs to search for a network and access.

In some embodiments, the first type of wireless network may be a 5G network; and the second type of wireless network may include at least one of the followings: a 4G network, a 3G network or a 2G network.

The 5G network does not have a full coverage at present. The above method may ensure that a terminal supporting the 5G network uses the 5G network to a greater extent as far as possible, thus reducing unnecessary network search, and improving the network performance of the terminal. The above 5G network may further include two types, i.e., 5G SA and 5G NSA. The 5G SA adopts standalone networking and thus has a small coverage range but best performance. While, the 5G NSA adopts non-standalone networking, utilizes original 4G base stations, and thus has a larger coverage range but lower performance than the 5G SA. Therefore, when the above first type of wireless network is searched for, the search priority of the two types of 5G networks may further be determined according to actual requirements, and the 5G networks may be searched for according to the priority.

If the two types of 5G networks are not found, the second type of wireless network may be searched for. Searching for the second type of wireless network may also be conducted according to the network priority of 4G, 3G and 2G, for example.

The embodiment of the disclosure further provides the following examples.

After being started up, a mobile terminal may search for networks in full frequency bands according to its own capability in all supported access technologies and frequency bands on the basis of the priority of the access technologies, and try to read information of a strongest signal cell at each frequency point. For example, after being started up, the terminal supporting 5G may first search for a 5G SA network, then search for a 5G NSA network, and then search for 4G, 3G, and 2G networks.

5G networks typically have more frequency bands and wider frequency ranges, it may take a long time to search for a 5G network. Especially in an early stage of limited 5G network deployment, searching for 5G network signals can be conducted only in 5G hot spot regions. This results in waste of 5G search time during network search in a non-5G hot spot coverage region where there is no 5G network actually. For example, several seconds to tens of seconds may be taken to conduct a 5G network search before searching for a 4G network is started. Such a way of network search may result in degraded user experience in a 5G terminal.

Therefore, in the embodiments of the disclosure, historical network registration situations of a terminal, location information of the terminal as well as a scope of a 5G hot spot region are comprehensively taken into consideration, thereby optimizing network search solutions.

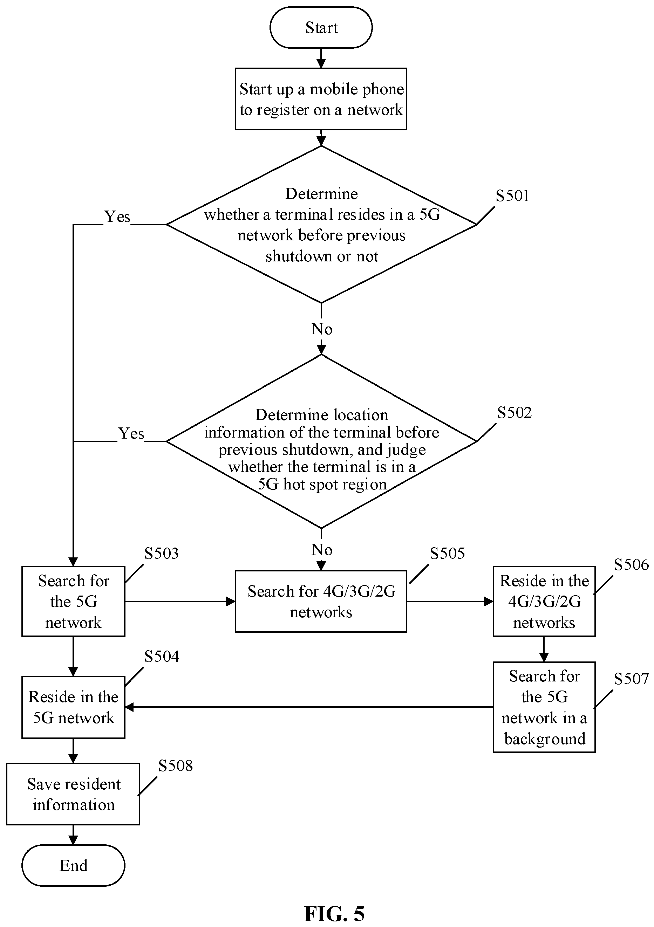

As shown in FIG. 5, a method for searching for a wireless network provided by an embodiment of the disclosure may be implemented by the following operations.

Operation S501 includes that whether a terminal resides in a 5G network before previous shutdown or not is determined. If the terminal resided in a 5G network before previous shutdown, searching for the 5G network may be conducted first. In the case that the 5G network is not found, searching for 4G, 3G or 2G networks may be conducted.

Operation S502 includes that location information of the terminal before previous shutdown is determined, and whether the terminal is in a 5G hot spot region or not is judged. If the terminal is in the hot spot region, searching for the 5G network may be conducted, and then searching other networks may be conducted. If the terminal is in a non-hot-spot region, the terminal may first reside in 4G, 3G or 2G networks.

Operation S503 includes that searching for the 5G network is conducted; if searching is successful, operation S504 may be executed, and if searching is failed, operation S505 may be executed.

Operation S504 includes that the terminal resides in the 5G network.

Operation S505 includes that searching for 4G, 3G or 2G networks is conducted; and if 4G, 3G or 2G networks are found, operation S506 may be executed.

Operation S506 includes that the terminal resides in the 4G, 3G or 2G networks, and operation S507 may be executed.

Operation S507 includes that searching for a 5G network in a background is conducted; and if a 5G network is found, operation S504 is executed.

Operation S508 includes that if the terminal presently resides in the 5G network, present resident information is saved.

Through the above solution, full-frequency-band and large-range network search may be effectively reduced when a terminal is in hot spot regions without being covered with novel networks such as a 5G network, and the speed of mobile network search is increased, which enables the terminal to be able to quickly reside in an effective wireless access network, improving use convenience and user experience in use of a mobile terminal.

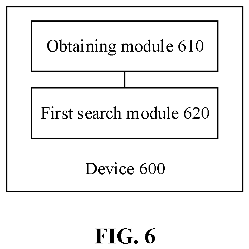

FIG. 6 is a block diagram of a device for searching for a wireless network shown according to an exemplary embodiment. Referring to FIG. 6, the device includes an obtaining module 610 and a first search module 620.

The obtaining module 610 is configured to obtain a type of a historical resident network of a terminal.

The first search module 620 is configured to search for a wireless network according to the type of the historical resident network.

The first search module includes:
an obtaining submodule, configured to obtain information of a historical location of the terminal when a type of the historical resident network is a second type of wireless network;
a determining submodule, configured to determine whether the historical location of the terminal is within a hot spot region of a first type of wireless network or not according to the information of the historical location; and
a third search submodule, configured to search for the first type of wireless network when the information of the historical location indicates that the historical location of the terminal is within the hot spot region of the first type of wireless network, wherein a performance index of the first type of wireless network is superior to a performance index of the second type of wireless network.

The first search module further includes:
a fourth search submodule, configured to search for the second type of wireless network when the information of the historical location indicates that the historical location of the terminal is outside the hot spot region of the first type of wireless network.

In some embodiments, the device may further include:
a detection module, configured to detect a type of a present resident network of the terminal; and
a second search module, configured to, when a type of the present resident network of the terminal is a second type of wireless network, search for the first type of wireless network while the terminal is kept residing in the second type of wireless network.

In some embodiments, the device may further include:
a switching module, configured to switch to reside in the first type of wireless network in response to that the terminal finds the first type of wireless network.

In some embodiments, the device may further include:
a saving module, configured to save resident information of residing in the first type of wireless network when a type of the present resident network of the terminal is the first type of wireless network.

In some embodiments, the first type of wireless network may be a 5G network; and the second type of wireless network may include at least one of the followings: a 4G network, a 3G network or a 2G network.

With respect to the device in the above embodiment, the specific manners for performing operations for individual modules therein have been described in detail in the embodiment regarding the method, which will not be elaborated herein.

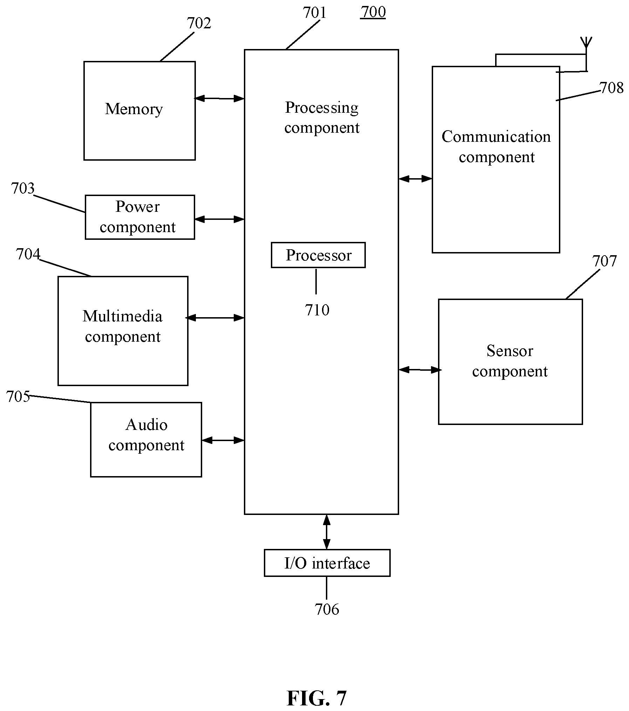

FIG. 7 is a physical structure block diagram of a search device 700 for a wireless network shown according to an exemplary embodiment. For example, the device 700 may be a mobile phone, a computer, a digital broadcasting terminal, message transceiver equipment, a game console, tablet equipment, medical equipment, fitness equipment, a personal digital assistant, and the like.

Referring FIG. 7, the device 700 may include one or more of the following components: a processing component 701, a memory 702, a power component 703, a multimedia component 704, an audio component 705, an Input/Output (I/O) interface 706, a sensor component 707, and a communication component 708.

The processing component 701 typically controls overall operations of the device 700, such as operations associated with display, telephone calls, data communications, camera operations, and recording operations. The processing component 701 may include one or more processors 710 to execute instructions to complete all or part of the operations of the method described above. Moreover, the processing component 701 may further include one or more modules which facilitate interaction between the processing component 701 and other components. For example, the processing component 701 may include a multimedia module to facilitate interaction between the multimedia component 704 and the processing component 701.

The memory 710 is configured to store various types of data to support the operations at the device 700. Examples of such data include instructions for any applications or methods operated on the device 700, contact data, phonebook data, messages, pictures, video, etc. The memory 702 may be implemented by using any type of volatile or nonvolatile memory equipment, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or optical disk.

The power component 703 may provide power for various components of the device 700. The power component 703 may include: a power management system, one or more power sources, and other components associated with generation, management and distribution of the power in the device 700.

The multimedia component 704 may include a screen providing an output interface between the device 700 and a user. In some embodiments, the screen may include a liquid crystal display (LCD) and a touch panel (TP). If the screen includes the TP, the screen may be implemented as a touch screen to receive an input signal from the user. The TP includes one or more touch sensors to sense touch, swipe, and gestures on the TP. The touch sensor may not only sense a boundary of a touch or swipe action, but also detect duration and pressure related to the touch or swipe operation. In some embodiments, the multimedia component 704 includes a front camera and/or a rear camera. The front camera and/or the rear camera may receive an external multimedia datum while the device 700 is in an operation mode, such as a photographing mode or a video mode. Each front camera and/or each rear camera may be fixed optical lens systems or may have focal lengths and optical zoom capabilities.

The audio component 705 is configured to output and/or input audio signals. For example, the audio component 705 includes a microphone (MIC), and the microphone is configured to receive an external audio signal when the device 700 is in an operation mode, such as a calling mode, a recording mode, and a voice identification mode. The received audio signals may be further stored in the memory 710 or transmitted via the communication component 708. In some embodiments, the audio component 705 may further include a speaker to output the audio signals.

The I/O interface 706 may provide an interface between the processing component 701 and peripheral interface modules, such as a keyboard, a click wheel, or buttons. These buttons may include, but are not limited to: a home button, a volume button, a start button, and a lock button.

The sensor component 707 may include one or more sensors configured to provide various aspects of state assessment for the device 700. For example, the sensor component 707 may detect an open/closed status of the device 700, and relative positioning of components. For example, the component is the display and the keypad of the device 700. The sensor component 707 may also detect a change in position of the device 700 or a component of the device 700, a presence or absence of user contact with the device 700, an orientation or an acceleration/deceleration of the device 700, and a change in temperature of the device 700. The sensor component 707 may include a proximity sensor configured to detect the presence of nearby objects without any physical contact. The sensor component 707 may also include light sensors, such as CMOS or CCD image sensors, for use in imaging applications. In some embodiments, the sensor component 707 may also include an acceleration sensor, a gyroscope sensor, a magnetic sensor, a pressure sensor, or a temperature sensor.

The communication component 708 is configured to facilitate communication, wired or wireless, between the device 700 and other equipment. The device 700 may access a wireless network based on a communication standard, such as WiFi, 2G or 3G, or a combination thereof. In one exemplary embodiment, the communication component 708 receives broadcast signals or broadcast related information from an external broadcast management system via a broadcast channel. In one exemplary embodiment, the communication component 708 may further include a Near-Field Communication (NFC) module to facilitate short-range communications. For example, the NFC module may be implemented based on a Radio Frequency Identification (RFID) technology, an Infrared Data Association (IrDA) technology, an Ultra-Wideband (UWB) technology, a Bluetooth (BT) technology, or other technologies.

In the exemplary embodiment, the device 700 may be implemented by one or more Application-Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors, or other electronic components to perform the above method.

In exemplary embodiments, there is also provided a non-transitory computer readable storage medium including instructions, such as included in the memory 702, executable by the processor 710 of the device 700 configured to perform the above method. For example, the non-transitory computer readable storage medium may be an ROM, an RAM, a CD-ROM, a magnetic tape, a floppy disk, an optical data storage device, and the like.

When instructions in a non-transitory computer-readable storage medium are executed by a processor of a mobile terminal, the mobile terminal is caused to perform any one of operations in the method provided in the above embodiments.

Other embodiments of the present disclosure will be apparent to those skilled in the art from consideration of the specification and practice of the disclosure herein.

It will be appreciated by the skilled person that the present disclosure is not limited to the exact construction that has been described above and illustrated in the accompanying drawings, and that various modifications and changes may be made without departing from the scope thereof. It is intended that the scope of the present disclosure is only limited by the appended claims.

## Claims

1. A method for searching for a wireless network, implemented by a terminal, comprising:
obtaining (S101) a type of a historical resident network of the terminal; and
searching for (S102) a wireless network according to the type of the historical resident network,
wherein searching for (S102) the wireless network according to the type of the historical resident network comprises:
searching for (S201) a first type of wireless network when the type of the historical resident network is the first type of wireless network; and
searching for (S202) a second type of wireless network in response to the first type of wireless network is not found, wherein a performance index of the first type of wireless network is superior to a performance index of the second type of wireless network,
wherein the performance index of the first type of wireless network being superior to the performance index of the second type of wireless network comprises:
a system bandwidth of the first type of wireless network is greater than a system bandwidth of the second type of wireless network,
wherein searching for (S102) the wireless network according to the type of the historical resident network further comprises:
obtaining (S301) information of a historical location of the terminal when the type of the historical resident network is the second type of wireless network;
determining (S302) whether the historical location of the terminal is within a hot spot region of the first type of wireless network or not according to the information of the historical location; and
searching for (S303) the first type of wireless network when the information of the historical location indicates that the historical location of the terminal is within the hot spot region of the first type of wireless network,
**characterized in that**,
searching for (S102) the wireless network according to the type of the historical resident network further comprises:
searching for (S401) the second type of wireless network when the information of the historical location indicates that the historical location of the terminal is outside the hot spot region of the first type of wireless network.

2. The method according to claim 1, further comprising:
detecting a type of a present resident network of the terminal; and
when the type of the present resident network of the terminal is the second type of wireless network, searching for the first type of wireless network while the terminal is kept residing in the second type of wireless network.

3. The method according to claim 1 or 2, further comprising:
switching to reside in the first type of wireless network in response to that the terminal finds the first type of wireless network.

4. The method according to any of claims 1 to 3, further comprising:
saving resident information of residing in the first type of wireless network when a type of the present resident network of the terminal is the first type of wireless network.

5. The method according to any of claims 1 to 4, wherein the first type of wireless network is a 5^{th} generation, 5G, network; and the second type of wireless network comprises at least one of followings: a 4^{th} generation, 4G, network, a 3^{rd} generation, 3G, network or a 2^{nd} generation, 2G, network.

6. A terminal for searching for a wireless network, comprising:
an obtaining module (610), configured to obtain a type of a historical resident network of the terminal; and
a first search module (620), configured to search for a wireless network according to the type of the historical resident network,
wherein the first search module (620) comprises:
a first search submodule, configured to search for a first type of wireless network when the type of the historical resident network is the first type of wireless network; and
a second search submodule, configured to search for a second type of wireless network in response to the first type of wireless network is not found, wherein a performance index of the first type of wireless network is superior to a performance index of the second type of wireless network,
wherein the performance index of the first type of wireless network being superior to the performance index of the second type of wireless network comprises:
a system bandwidth of the first type of wireless network is greater than a system bandwidth of the second type of wireless network,
wherein the first search module (620) comprises:
an obtaining submodule, configured to obtain information of a historical location of the terminal when the type of the historical resident network is the second type of wireless network;
a determining submodule, configured to determine whether the historical location of the terminal is within a hot spot region of the first type of wireless network or not according to the information of the historical location; and
a third search submodule, configured to search for the first type of wireless network when the information of the historical location indicates that the historical location of the terminal is within the hot spot region of the first type of wireless network,
**characterized in that**,
the first search module (620) further comprises:
a fourth search submodule, configured to search for the second type of wireless network when the information of the historical location indicates that the historical location of the terminal is outside the hot spot region of the first type of wireless network.

7. The device according to claim 6, further comprising:
a detection module, configured to detect a type of a present resident network of the terminal; and
a second search module, configured to, when the type of the present resident network of the terminal is the second type of wireless network, search for the first type of wireless network while the terminal is kept residing in the second type of wireless network.

8. The device according to claim 6 or 7, further comprising:
a switching module, configured to switch to reside in the first type of wireless network in response to that the terminal finds the first type of wireless network.

9. The device according to any of claims 6 to 8, further comprising:
a saving module, configured to save resident information of residing in the first type of wireless network when a type of the present resident network of the terminal is the first type of wireless network.

## Patentansprüche

1. Verfahren zur Suche nach einem drahtlosen Netzwerk, das von einem Endgerät implementiert wird, umfassend:
Erhalten (S101) eines Typs eines historischen residenten Netzwerks des Endgeräts; und
Suchen nach (S102) einem drahtlosen Netzwerk gemäß dem Typ des historischen residenten Netzwerks,
wobei das Suchen nach (S102) dem drahtlosen Netzwerk gemäß dem Typ des historischen residenten Netzwerks umfasst:
Suchen nach (S201) einem ersten Typ von drahtlosem Netzwerk, wenn der Typ des historischen residenten Netzwerks der erste Typ von drahtlosem Netzwerk ist; und
Suchen nach (S202) einem zweiten Typ von drahtlosem Netzwerk als Reaktion darauf, dass der erste Typ von drahtlosem Netzwerk nicht gefunden wird, wobei ein Leistungsindex des ersten Typs von drahtlosem Netzwerk einem Leistungsindex des zweiten Typs von drahtlosem Netzwerk überlegen ist,
wobei, dass der Leistungsindex des ersten Typs von drahtlosem Netzwerk dem Leistungsindex des zweiten Typs von drahtlosem Netzwerk überlegen ist, umfasst:
eine Systembandbreite des ersten Typs von drahtlosem Netzwerk ist größer als eine Systembandbreite des zweiten Typs von drahtlosem Netzwerk,
wobei das Suchen nach (S102) dem drahtlosen Netzwerk gemäß dem Typ des historischen residenten Netzwerks umfasst:
Erhalten (S301) von Informationen zu einem historischen Standort des Endgeräts, wenn der Typ des historischen residenten Netzwerks der zweite Typ von drahtlosem Netzwerk ist;
Bestimmen (S302), ob der historische Standort des Endgeräts innerhalb eines Hot-Spot-Bereichs des ersten Typs von drahtlosem Netzwerk oder nicht gemäß den Informationen zu dem historischen Standort liegt; und
Suchen nach (S303) dem ersten Typ von drahtlosem Netzwerk, wenn die Informationen zu dem historischen Standort angeben, dass der historische Standort des Endgeräts innerhalb des Hot-Spot-Bereichs des ersten Typs von drahtlosem Netzwerk liegt,
**dadurch gekennzeichnet, dass**
das Suchen nach (S102) dem drahtlosen Netzwerk gemäß dem Typ des historischen residenten Netzwerks ferner umfasst:
Suchen nach (S401) dem zweiten Typ von drahtlosem Netzwerk, wenn die Informationen zu dem historischen Standort angeben, dass der historische Standort des Endgeräts außerhalb des Hot-Spot-Bereichs des ersten Typs von drahtlosem Netzwerk liegt.

2. Verfahren nach Anspruch 1, das ferner umfasst:
Detektieren eines Typs eines vorhandenen residenten Netzwerks des Endgeräts; und
wenn der Typ des vorhandenen residenten Netzwerks des Endgeräts der zweite Typ von drahtlosem Netzwerk ist, Suchen nach dem ersten Typ von drahtlosem Netzwerk, während das Endgerät weiter in dem zweiten Typ von drahtlosem Netzwerk bleibt.

3. Verfahren nach Anspruch 1 oder 2, das ferner umfasst:
Umschalten, um in dem ersten Typ von drahtlosem Netzwerk zu bleiben, als Reaktion darauf, dass das Endgerät den ersten Typ von drahtlosem Netzwerk findet.

4. Verfahren nach einem der Ansprüche 1 bis 3, das ferner umfasst:
Speichern von residenten Informationen zum Verbleib in dem ersten Typ von drahtlosem Netzwerk, wenn ein Typ des vorhandenen residenten Netzwerks des Endgeräts der erste Typ von drahtlosem Netzwerk ist.

5. Verfahren nach einem der Ansprüche 1 bis 4, wobei der erste Typ von drahtlosem Netzwerk ein Netzwerk der 5. Generation, 5G, ist; und wobei der zweite Typ von drahtlosem Netzwerk mindestens eines aus Folgendem umfasst: ein Netzwerk der 4. Generation, 4G, ein Netzwerk der 3. Generation, 3G, oder ein Netzwerk der 2. Generation, 2G.

6. Endgerät zum Suchen nach einem drahtlosen Netzwerk, das aufweist:
ein Erfassungsmodul (610), das dazu ausgebildet ist, einen Typ eines historischen residenten Netzwerks des Endgeräts zu erhalten; und
ein erstes Suchmodul (620), das dazu ausgebildet ist, nach einem drahtlosen Netzwerk gemäß dem Typ des historischen residenten Netzwerks zu suchen,
wobei das erste Suchmodul (620) aufweist:
ein erstes Suchsubmodul, das dazu ausgebildet ist, nach einem ersten Typ von drahtlosem Netzwerk zu suchen, wenn der Typ des historischen residenten Netzwerks der erste Typ von drahtlosem Netzwerk ist; und
ein zweites Suchsubmodul, das dazu ausgebildet ist, nach einem zweiten Typ von drahtlosem Netzwerk zu suchen, als Reaktion darauf, dass der erste Typ von drahtlosem Netzwerk nicht gefunden wird, wobei ein Leistungsindex des ersten Typs von drahtlosem Netzwerk einem Leistungsindex des zweiten Typs von drahtlosem Netzwerk überlegen ist,
wobei, dass der Leistungsindex des ersten Typs von drahtlosem Netzwerk dem Leistungsindex des zweiten Typs von drahtlosem Netzwerk überlegen ist, umfasst:
eine Systembandbreite des ersten Typs von drahtlosem Netzwerk ist größer als eine Systembandbreite des zweiten Typs von drahtlosem Netzwerk,
wobei das erste Suchmodul (620) aufweist:
ein Erfassungssubmodul, das dazu ausgebildet ist, Informationen zu einem historischen Standort des Endgeräts zu erhalten, wenn der Typ des historischen residenten Netzwerks der zweite Typ von drahtlosem Netzwerk ist;
ein Bestimmungssubmodul, das dazu ausgebildet ist, zu bestimmen, ob der historische Standort des Endgeräts innerhalb eines Hot-Spot-Bereichs des ersten Typs von drahtlosem Netzwerk oder nicht gemäß den Informationen zu dem historischen Standort liegt; und
ein drittes Suchsubmodul, das dazu ausgebildet ist, nach dem ersten Typ von drahtlosem Netzwerk zu suchen, wenn die Informationen zu dem historischen Standort angeben, dass der historische Standort des Endgeräts innerhalb des Hot-Spot-Bereichs des ersten Typs von drahtlosem Netzwerk liegt,
**dadurch gekennzeichnet, dass**
das erste Suchmodul (620) ferner aufweist:
ein viertes Suchsubmodul, das dazu ausgebildet ist, nach dem zweiten Typ von drahtlosem Netzwerk zu suchen, wenn die Informationen zu dem historischen Standort angeben, dass der historische Standort des Endgeräts außerhalb des Hot-Spot-Bereichs des ersten Typs von drahtlosem Netzwerk liegt.

7. Vorrichtung nach Anspruch 6, die ferner aufweist:
ein Detektionsmodul, das dazu ausgebildet ist, einen Typ eines vorhandenen residenten Netzwerks des Endgeräts zu detektieren; und
ein zweites Suchmodul, das dazu ausgebildet ist, wenn der Typ des vorhandenen residenten Netzwerks des Endgeräts der zweite Typ von drahtlosem Netzwerk ist, nach dem ersten Typ von drahtlosem Netzwerk zu suchen, während das Endgerät weiter in dem zweiten Typ von drahtlosem Netzwerk bleibt.

8. Vorrichtung nach Anspruch 6 oder 7, die ferner aufweist:
ein Umschaltmodul, das dazu ausgebildet ist, zum Verbleib in dem ersten Typ von drahtlosem Netzwerk umzuschalten, als Reaktion darauf, dass das Endgerät den ersten Typ von drahtlosem Netzwerk findet.

9. Vorrichtung nach einem der Ansprüche 6 bis 8, die ferner aufweist:
ein Speichermodul, das dazu ausgebildet ist, residente Informationen zum Verbleib in dem ersten Typ von drahtlosem Netzwerk zu speichern, wenn ein Typ des vorhandenen residenten Netzwerks des Endgeräts der erste Typ von drahtlosem Netzwerk ist.

## Revendications

1. Procédé de recherche d'un réseau sans fil, mis en œuvre par un terminal, comprenant les étapes consistant à :
obtenir (S101) un type d'un réseau résident historique du terminal ; et
rechercher (S102) un réseau sans fil conformément au type du réseau résident historique,
dans lequel l'étape de recherche (S102) du réseau sans fil conformément au type du réseau résident historique comprend les étapes consistant à :
rechercher (S201) un premier type de réseau sans fil lorsque le type du réseau résident historique est le premier type de réseau sans fil ; et
rechercher (S202) un second type de réseau sans fil en réponse au fait que le premier type de réseau sans fil n'a pas été trouvé, dans lequel un indice de performance du premier type de réseau sans fil est supérieur à un indice de performance du second type de réseau sans fil,
dans lequel le fait que l'indice de performance du premier type de réseau sans fil est supérieur à l'indice de performance du second type de réseau sans fil est tel que :
une largeur de bande de système du premier type de réseau sans fil est supérieure à une largeur de bande de système du second type de réseau sans fil,
dans lequel l'étape de recherche (S102) du réseau sans fil conformément au type du réseau résident historique comprend en outre les étapes consistant à :
obtenir (S301) des informations d'une position historique du terminal lorsque le type du réseau résident historique est le second type de réseau sans fil ;
déterminer (S302) si la position historique du terminal est située, ou non, dans une région de point d'accès sans fil du premier type de réseau sans fil conformément aux informations de la position historique ; et
rechercher (S303) le premier type de réseau sans fil lorsque les informations de la position historique indiquent que la position historique du terminal est située dans la région de point d'accès sans fil du premier type de réseau sans fil,
**caractérisé en ce que**
l'étape de recherche (S102) du réseau sans fil conformément au type du réseau résident historique comprend en outre l'étape consistant à :
rechercher (S401) le second type de réseau sans fil lorsque les informations de la position historique indiquent que la position historique du terminal est située en dehors de la région de point d'accès sans fil du premier type de réseau sans fil.

2. Procédé selon la revendication 1, comprenant en outre les étapes consistant à :
détecter un type d'un réseau résident présent du terminal ; et
lorsque le type du réseau résident présent du terminal est le second type de réseau sans fil, rechercher le premier type de réseau sans fil tandis que le terminal est maintenu en résidence dans le second type de réseau sans fil.

3. Procédé selon la revendication 1 ou la revendication 2, comprenant en outre l'étape consistant à :
effectuer une commutation pour résider dans le premier type de réseau sans fil en réponse au fait que le terminal trouve le premier type de réseau sans fil.

4. Procédé selon l'une quelconque des revendications 1 à 3, comprenant en outre l'étape consistant à :
sauvegarder des informations de résidence de résidence dans le premier type de réseau sans fil lorsqu'un type du réseau résident présent du terminal est le premier type de réseau sans fil.

5. Procédé selon l'une quelconque des revendications 1 à 4, dans lequel le premier type de réseau sans fil est un réseau de 5^{è} génération, dite 5G ; et le second type de réseau sans fil comprend au moins l'un des réseaux suivants parmi : un réseau de 4^{è} génération, dite 4G, un réseau de 3^{è} génération, dite 3G, ou un réseau de 2^{è} génération, dite 2G.

6. Terminal de recherche d'un réseau sans fil, comprenant :
un module d'obtention (610), configuré pour obtenir un type d'un réseau résident historique du terminal ; et
un premier module de recherche (620), configuré pour rechercher un réseau sans fil conformément au type du réseau résident historique,
dans lequel le premier module de recherche (620) comprend :
un premier sous-module de recherche, configuré pour rechercher un premier type de réseau sans fil lorsque le type du réseau résident historique est le premier type de réseau sans fil ; et
un deuxième sous-module de recherche, configuré pour rechercher un second type de réseau sans fil en réponse au fait que le premier type de réseau sans fil n'a pas été trouvé, dans lequel un indice de performance du premier type de réseau sans fil est supérieur à un indice de performance du second type de réseau sans fil,
dans lequel le fait que l'indice de performance du premier type de réseau sans fil est supérieur à l'indice de performance du second type de réseau sans fil est tel que :
une largeur de bande de système du premier type de réseau sans fil est supérieure à une largeur de bande de système du second type de réseau sans fil,
dans lequel le premier module de recherche (620) comprend :
un sous-module d'obtention, configuré pour obtenir des informations d'une position historique du terminal lorsque le type du réseau résident historique est le second type de réseau sans fil ;
un sous-module de détermination, configuré pour déterminer si la position historique du terminal est située, ou non, dans une région de point d'accès sans fil du premier type de réseau sans fil conformément aux informations de la position historique ; et
un troisième sous-module de recherche, configuré pour rechercher le premier type de réseau sans fil lorsque les informations de la position historique indiquent que la position historique du terminal est située dans la région de point d'accès sans fil du premier type de réseau sans fil,
**caractérisé en ce que**,
le premier module de recherche (620) comprend en outre :
un quatrième sous-module de recherche, configuré pour rechercher le second type de réseau sans fil lorsque les informations de la position historique indiquent que la position historique du terminal est située en dehors de la région de point d'accès sans fil du premier type de réseau sans fil.

7. Dispositif selon la revendication 6, comprenant en outre :
un module de détection, configuré pour détecter un type d'un réseau résident présent du terminal ; et
un second module de recherche, configuré, lorsque le type du réseau résident présent du terminal est le second type de réseau sans fil, pour rechercher le premier type de réseau sans fil tandis que le terminal est maintenu en résidence dans le second type de réseau sans fil.

8. Dispositif selon la revendication 6 ou la revendication 7, comprenant en outre :
un module de commutation, configuré pour effectuer une commutation pour résider dans le premier type de réseau sans fil en réponse au fait que le terminal trouve le premier type de réseau sans fil.

9. Dispositif selon l'une quelconque des revendications 6 à 8, comprenant en outre :
un module de sauvegarde, configuré pour sauvegarder des informations de résidence de résidence dans le premier type de réseau sans fil lorsqu'un type du réseau résident présent du terminal est le premier type de réseau sans fil.
